# EUROPÄISCHE PATENTANMELDUNG

(11) **EP 4 775 037 A1**
(43) Veröffentlichungstag der Anmeldung: **15.07.2026**
(21) Anmeldenummer: 26150820.4
(22) Anmeldetag: 08.01.2026
(51) Int. Cl.: A21D 13/24, A21D 13/28, A21D 13/40, A23G 1/54, B65D 85/36

(54) **LAUGENSCHOKOLADEGEBÄCK**

(30) Priorität: 08.01.2025 DE 202025100072 U
(71) Anmelder: Diekmann, Manfred, 30890 Barsinghausen (DE)
(72) Erfinder: Diekmann, Manfred, 30890 Barsinghausen (DE); Schmidt, Vitali, 32602 Vlotho (DE)
(74) Vertreter: Michalski Hüttermann & Partner mbB

(57) **Zusammenfassung**

Die Erfindung betrifft Laugenschokoladegebäck, umfassend zerkleinerte und getrocknete Stücke von Laugen-gebäck, wobei die Stücke mit einer Schokoladenschicht überzogen sind. Auf diese Weise wird ein neuer Snack bereitgestellt.

## Beschreibung

Die Erfindung betrifft Snacks und insbesondere mit Schokolade überzogene Snacks.

Snacks sind ein fester Bestandteil der modernen Ernährung und Lebensweise. Ob bei der Arbeit, zu Hause, unterwegs oder bei gesellschaftlichen Anlässen - die Menschen greifen häufig zu kleinen Speisen, die schnell verfügbar und einfach zu genießen sind. Dabei stehen Snacks nicht nur für die schnelle Befriedigung des Hungers, sondern auch für Genuss und Abwechslung. Süßigkeiten und insbesondere Schokolade zählen zu den beliebtesten Snackarten, da sie mit ihrem süßen Geschmack und ihrer cremigen Textur für viele Menschen eine besondere Gaumenfreude darstellen. Schokolade wird nicht nur pur genossen, sondern auch in Kombination mit Nüssen, Früchten, Keksen und anderen Bestandteilen, wodurch sie in zahlreichen Variationen auf dem Markt verfügbar ist.

Parallel zu süßen Snacks erfreuen sich salzige Snacks großer Beliebtheit. Besonders Laugengebäck ist in diesem Zusammenhang weithin bekannt und geschätzt. Im Snackbereich begegnet uns Laugengebäck häufig in Form von Salzstangen, kleinen Salzbrezeln oder ähnlichen Produkten. Diese sind nicht nur in Deutschland, sondern weltweit beliebt und werden gerne bei Feiern, im Büro oder einfach als Zwischenmahlzeit konsumiert. Diese kleinen, knusprigen Formen von Laugengebäck überzeugen durch ihre herzhafte, leicht salzige Note und harmonieren gut mit verschiedenen Getränken, wie Bier aber auch alkoholfreien Getränken. Die Herstellung dieses Laugengebäcks erfolgt häufig mittels Extrusion.

Über die kleinen, als Snacks bekannten Varianten hinaus, ist Laugengebäck auch in grö-ßeren Formen und als traditionelles Backwerk weit verbreitet. Typische Beispiele hierfür sind Brezeln, Laugenknoten und Laugenbrötchen. Ursprünglich vor allem in Süddeutschland und Teilen der Schweiz beheimatet, hat sich dieses Gebäck mittlerweile in ganz Deutschland und darüber hinaus etabliert. In seiner klassischen Form wird es oft als herzhaftes Gebäck zum Frühstück, Abendessen oder zur Brotzeit genossen. Es wird häufig mit Butter bestrichen oder in Kombination mit Käse, Wurst und anderen herzhaften Belägen serviert. Besonders in Bayern und Baden-Württemberg gehört die Brezel fest zur Kultur und wird dort nicht nur als tägliches Nahrungsmittel, sondern auch bei festlichen Anlässen wie dem Oktoberfest geschätzt. Die Popularität von Laugengebäck hat dazu geführt, dass es heute in den unterschiedlichsten Variationen erhältlich ist. Neben den klassischen Brezeln und Brötchen gibt es auch Kreationen, die mit Käse überbacken, mit Samen oder Körnern bestreut oder mit speziellen Gewürzmischungen verfeinert sind. Die charakteristische Lauge, die dem Gebäck seinen unverwechselbaren Geschmack verleiht, bleibt jedoch stets das zentrale Merkmal dieses Produkts.

Davon ausgehend ist es die Aufgabe der Erfindung, einen interessanten neuen Snack bereitzustellen.

Diese Aufgabe wird durch die Gegenstände der unabhängigen Ansprüche gelöst. Bevorzugte Weiterbildungen finden sich in den Unteransprüchen.

Insofern wird erfindungsgemäß ein Laugenschokoladegebäck bereitgestellt, das zerkleinerte und getrocknete Stücke von Laugengebäck umfasst, wobei die Stücke mit einer Schokoladenschicht überzogen sind.

Trotz der weit verbreiteten Beliebtheit von Laugengebäck und Schokolade als zwei separate Snackkategorien gibt es bislang keine Ansätze, diese beiden Genusswelten miteinander zu verbinden. Dabei bietet gerade Laugengebäck mit seiner typischen Konsistenz und seinem herzhaften Geschmack großes Potenzial, um in Kombination mit der Süße und Cremigkeit von Schokolade neue Geschmacksdimensionen zu erschließen.

Die vorliegende Erfindung trägt diesem Bedarf Rechnung und bietet eine völlig neue Art von Snack, die die herzhafte Welt des Laugengebäcks mit der süßen Welt der Schokolade verbindet. Dadurch wird ein innovatives Produkt geschaffen, das sowohl den Liebhabern von salzigen als auch von süßen Snacks ein neuartiges Geschmackserlebnis bietet.

Mit der Kombination aus traditionellem Laugengebäck und hochwertiger Schokolade lässt sich nicht nur eine besondere Gaumenfreude erzeugen, sondern auch ein Produkt, das sich durch seine Vielseitigkeit auszeichnet. Es kann als Snack für zwischendurch, als besondere Beilage zu Desserts oder als ansprechendes Angebot bei Festen und Feiern verwendet werden. Die vorliegende Erfindung eröffnet somit neue Möglichkeiten, um den Snackmarkt um eine kreative und schmackhafte Innovation zu bereichern.

Die Bereitstellung von mit Schokolade überzogenem, zerkleinertem Laugengebäck adressiert eine Reihe von Aufgaben, die sowohl den Genusswert als auch die Funktionalität des Produkts betreffen. Ein zentraler Aspekt besteht in der Verknüpfung zweier Geschmackswelten, die traditionell eher getrennt wahrgenommen werden: die salzige, herzhafte Note des Laugengebäcks und die süße, cremige Textur der Schokolade. Diese Kombination schafft ein vollkommen neues Geschmackserlebnis, das den Ansprüchen moderner Verbraucher gerecht wird, die zunehmend nach innovativen und abwechslungsreichen Snackoptionen suchen. Durch diese Mischung wird gleichzeitig eine breitere Zielgruppe angesprochen, da sowohl Liebhaber süßer als auch salziger Snacks begeistert werden können.

Darüber hinaus erweitert das Produkt den bestehenden Snackmarkt durch eine kreative Alternative zu klassischen Angeboten wie Schokoladenkeksen oder salzigen Chips. Es erfüllt das Bedürfnis der Konsumenten nach originellen Geschmackskombinationen und hebt sich durch seine Einzigartigkeit von anderen Snacks ab. Dabei bietet es nicht nur Abwechslung, sondern auch einen hohen Wiedererkennungswert. Die Verwendung von Laugengebäck als Grundlage in Verbindung mit Schokolade spricht sowohl traditionelle als auch experimentierfreudige Verbraucher an und bedient unterschiedliche Präferenzen.

Ein weiterer Vorteil des Produkts liegt in der praktischen und portionsgerechten Form. Das Zerkleinern des Laugengebäcks in mundgerechte Stücke macht es besonders alltagstauglich und bequem für den Konsum. Diese Form erleichtert den Verzehr, da keine zusätzliche Vorbereitung durch den Verbraucher erforderlich ist. Gleichzeitig wird der Snack durch das Trocknen der Stücke knuspriger und ansprechender, was den Genusswert weiter steigert. Diese Knusprigkeit, kombiniert mit der glatten und schmelzenden Textur der Schokoladenschicht, sorgt für ein sensorisches Erlebnis, das sowohl den Geschmackssinn als auch die haptischen und akustischen Wahrnehmungen anspricht.

Ein weiterer Effekt ist die erhöhte Haltbarkeit des Produkts. Durch die Trocknung der zerkleinerten Stücke und den Schutz, den die Schokoladenschicht bietet, wird die Anfälligkeit für Verderb reduziert. Dies macht das Produkt nicht nur für den Verbraucher attraktiver, sondern erleichtert auch Lagerung und Vertrieb. Die verbesserte Haltbarkeit trägt dazu bei, dass das Produkt flexibel einsetzbar ist und über einen längeren Zeitraum hinweg in gleichbleibender Qualität genossen werden kann.

Mit diesem Produkt werden zudem neue Verzehranlässe erschlossen. Es eignet sich nicht nur als Snack für zwischendurch, sondern auch als Begleiter zu Kaffee und Tee, als originelle Komponente bei Feiern und Anlässen oder sogar als Zutat für Desserts. Diese Vielseitigkeit macht es für unterschiedlichste Konsumsituationen interessant und sorgt dafür, dass das Produkt sowohl im privaten als auch im gesellschaftlichen Kontext Verwendung findet.

Ein weiterer Aspekt betrifft die nachhaltige Nutzung von Rohstoffen. Die Zerkleinerung von bereits gebackenem Laugengebäck ermöglicht es, Backwaren effizient zu nutzen, die möglicherweise nicht mehr als Ganzes verkauft werden könnten. Dadurch wird potenzieller Lebensmittelverlust reduziert, was nicht nur ökonomische Vorteile bringt, sondern auch einen Beitrag zur Nachhaltigkeit leistet. Dies ist insbesondere in Zeiten wachsender Sensibilität gegenüber Umweltfragen ein wichtiger Aspekt, der das Produkt für umweltbewusste Verbraucher attraktiv macht.

Neben den geschmacklichen Vorteilen überzeugt das Produkt auch durch seinen sensorischen Mehrwert. Die Kombination aus der knusprigen Struktur des Laugengebäcks und der glatten Schokoladenschicht erzeugt ein komplexes und ansprechendes Erlebnis, das den Genuss auf mehreren Ebenen anspricht. Die Texturen ergänzen sich auf besondere Weise: Die knackige Basis aus Laugengebäck bildet einen spannenden Kontrast zur zartschmelzenden Schokolade, wodurch ein einzigartiges Mundgefühl entsteht.

Insgesamt löst die Bereitstellung von mit Schokolade überzogenem, zerkleinertem Laugengebäck die Aufgabe, ein innovatives Snackprodukt zu schaffen, das sowohl geschmacklich als auch funktional überzeugt. Es erweitert den bestehenden Markt, bietet ein vielseitiges Anwendungsspektrum, erhöht den Genusswert durch die Verbindung unterschiedlicher Aromen und Texturen und trägt durch die effiziente Nutzung von Rohstoffen zur Nachhaltigkeit bei. Dieses Produkt bietet somit eine durchdachte und kreative Lösung für die sich stetig wandelnden Bedürfnisse des Snackmarkts.

Gemäß einer Weiterbildung der Erfindung besteht das Laugengebäck aus nicht-extrudierter Backware. Die zerkleinerten und getrockneten Stücke stammen z. B. von Laugenbrezeln, Laugennoten, Laugenbrötchen oder Laugenstangen, die allerdings als typisches Snackgebück nicht mittels Extrusion hergestellt worden sind. Diese Weiterbildung der Erfindung bietet zahlreiche Vorteile und spezifische Funktionen, die sowohl die Qualität des Produkts als auch dessen sensorische und geschmackliche Eigenschaften betreffen.

Ein wesentlicher Vorteil der Verwendung von nicht-extrudierter Backware liegt in der authentischen Beschaffenheit und dem traditionellen Charakter des Laugengebäcks. Nicht-extrudiertes Laugengebäck, wie Laugenbrezeln, Laugenknoten, Laugenbrötchen oder Laugenstangen, wird klassisch durch Teigformen und Backverfahren hergestellt. Dies führt zu einer charakteristischen Kruste und einer lockeren, jedoch strukturierten Innenbeschaffenheit, die durch maschinelle Extrusionsprozesse praktisch nicht zu erreichen ist. Die handwerkliche und traditionelle Herstellung verleiht dem Gebäck nicht nur einen unverwechselbaren Geschmack, sondern auch eine ansprechende Optik und Textur.

Die Verwendung von nicht-extrudierten Backwaren sorgt außerdem für eine größere geschmackliche Vielfalt. Im Gegensatz zu extrudiertem Gebäck, das häufig eine standardisierte Textur und einen einheitlichen Geschmack aufweist, bietet traditionelles Laugengebäck Nuancen in der Kruste und im Inneren. Die intensive, herzhafte Note der Lauge bleibt durch die traditionelle Herstellung besser erhalten und entfaltet sich optimal im fertigen Produkt. Dies hebt die Qualität und den Genusswert des Snacks deutlich hervor und macht ihn besonders attraktiv für Verbraucher, die Wert auf hochwertige und authentische Lebensmittel legen.

Ein weiterer Vorteil ist die besondere Konsistenz des nicht-extrudierten Laugengebäcks. Während extrudiertes Gebäck meist eine gleichmäßig poröse Struktur aufweist, ist traditionelles Gebäck durch eine dichte, saftige Innenstruktur und eine feste, oft glänzende Außenschicht gekennzeichnet. Diese Textur bleibt auch nach dem Zerkleinern und Trocknen weitgehend erhalten, was dazu beiträgt, dass die zerkleinerten Stücke knusprig, aber nicht brüchig werden. Dadurch entsteht ein ausgewogenes Mundgefühl, das durch den Kontrast zur weichen Schokoladenschicht zusätzlich verstärkt wird.

Die Entscheidung, auf extrudiertes Gebäck zu verzichten, bringt zudem den Vorteil einer höheren Produktdiversität mit sich. Extrudierte Produkte sind häufig auf kleine, gleichförmige Formen wie Sticks oder kleine Brezeln beschränkt, während nicht-extrudiertes Gebäck eine Vielzahl an Varianten bietet, die in Größe, Form und Struktur variieren können. Diese Vielfalt erlaubt es, das Produkt in unterschiedlichen Größen und Ausführungen anzubieten, was den Snack sowohl optisch als auch haptisch ansprechender macht.

Darüber hinaus trägt die Wahl von nicht-extrudiertem Laugengebäck zur Wahrnehmung des Produkts als qualitativ hochwertig und handwerklich anspruchsvoll bei. Extrudierte Produkte werden oft mit industrieller Massenproduktion assoziiert, während traditionell hergestellte Backwaren mit Regionalität, Authentizität und einem gewissen Premium-Charakter verbunden sind. Diese Attribute stärken die Marktposition des Produkts und sprechen eine wachsende Zielgruppe von Verbrauchern an, die sich für nachhaltig und handwerklich hergestellte Lebensmittel interessiert.

Die Entscheidung, auf nicht-extrudiertes Gebäck zurückzugreifen, hat schließlich auch funktionale Vorteile im Herstellungsprozess. Da die Stücke aus größeren, bereits gebackenen Backwaren wie Brezeln oder Brötchen stammen, wird eine gleichmäßige Trocknung und ein optimales Verhältnis zwischen Kruste und Innenstruktur erreicht. Dies verbessert nicht nur die Knusprigkeit der getrockneten Stücke, sondern reduziert auch die Wahrscheinlichkeit, dass das Produkt bröckelig oder trocken wird.

Gemäß einer Weiterbildung der Erfindung bedeckt die Schokoladenschicht die Oberflächen der zerkleinerten und getrockneten Stücke von Laugengebäck jeweils vollständig. Ein wesentlicher Vorteil der vollständigen Bedeckung mit Schokolade liegt in der geschmacklichen Harmonie, die dadurch erzielt wird. Die durchgängige Schokoladenschicht sorgt dafür, dass bei jedem Bissen der volle Geschmack der Schokolade zur Geltung kommt und sich gleichmäßig mit der herzhaften Note des Laugengebäcks verbindet. Dadurch entsteht ein abgerundetes Geschmackserlebnis, das beide Komponenten - die Süße der Schokolade und die Salzigkeit des Gebäcks - optimal in Szene setzt. Im Gegensatz zu teilweiser Bedeckung oder unregelmäßigem Überzug wird sichergestellt, dass keine Geschmacksunterschiede zwischen den einzelnen Stücken auftreten, was den Genusswert des Snacks erheblich steigert.

Darüber hinaus bietet die vollständige Schokoladenschicht eine Schutzfunktion für die zerkleinerten und getrockneten Stücke. Die Schokolade umhüllt die Stücke vollständig und wirkt wie eine Barriere, die das Laugengebäck vor äußeren Einflüssen wie Feuchtigkeit oder Luft schützt. Dies trägt maßgeblich zur Haltbarkeit des Produkts bei, da die Gefahr von Feuchtigkeitsaufnahme, die zu einer Beeinträchtigung der Knusprigkeit führen könnte, reduziert wird. Auch die Gefahr des Geschmacksverlusts oder der Oxidation wird durch die Schokoladenschicht minimiert, was das Produkt über einen längeren Zeitraum hinweg frisch und genussfähig hält.

Ein weiterer Vorteil ist die Verbesserung der Handhabung des Produkts. Durch die vollständige Ummantelung mit Schokolade wird verhindert, dass Krümel oder Partikel des Laugengebäcks auf die Hände oder die Umgebung gelangen. Dies macht den Snack sauberer und bequemer zu konsumieren, insbesondere in Situationen, in denen keine Servietten oder andere Hilfsmittel zur Verfügung stehen. Dies erhöht die Alltagstauglichkeit des Produkts und macht es zu einer attraktiven Wahl für unterwegs, bei der Arbeit oder bei gesellschaftlichen Anlässen.

Auch die optische Attraktivität des Produkts wird durch die vollständige Schokoladenschicht gesteigert. Die gleichmäßige Ummantelung verleiht jedem Stück eine glatte, glänzende Oberfläche, die das Auge anspricht und den Eindruck eines hochwertigen und sorgfältig hergestellten Produkts vermittelt. Die Schokoladenschicht kann zudem durch unterschiedliche Farbvarianten wie Vollmilch-, Zartbitter- oder weiße Schokolade variiert werden, was dem Produkt eine zusätzliche visuelle Vielfalt verleiht und es für unterschiedliche Zielgruppen ansprechend macht.

Die vollständige Ummantelung bietet darüber hinaus sensorische Vorteile, die über den Geschmack hinausgehen. Die glatte, schmelzende Textur der Schokolade bildet einen angenehmen Kontrast zur knusprigen Konsistenz des Laugengebäcks. Diese Kombination von Texturen schafft ein besonderes Mundgefühl, das den Snack einzigartig macht und für eine ansprechende sensorische Erfahrung sorgt. Jeder Biss bietet eine harmonische Verbindung von knusprigem Kern und zarter Schokolade, was den Genuss intensiviert und den Snack von anderen Produkten auf dem Markt abhebt.

Zudem ermöglicht die vollständige Bedeckung eine bessere Integration zusätzlicher Zutaten oder Geschmacksstoffe. Gewürze, Nüsse, Fruchtstücke oder andere Elemente können in die Schokolade eingearbeitet werden, ohne dass sie direkt mit dem Laugengebäck in Kontakt kommen und dessen Struktur oder Geschmack beeinträchtigen. Dies eröffnet zahlreiche Möglichkeiten für Produktvariationen, die den Snack noch vielseitiger und anpassbarer an die Vorlieben unterschiedlicher Verbraucher machen.

Insgesamt führt die vollständige Bedeckung der zerkleinerten und getrockneten Stücke von Laugengebäck mit einer Schokoladenschicht zu einem qualitativ hochwertigen, geschmacklich abgerundeten und optisch ansprechenden Snackprodukt. Sie verbessert die Haltbarkeit, erleichtert die Handhabung und bietet sowohl sensorisch als auch visuell ein besonderes Erlebnis. Diese Eigenschaften machen das Produkt nicht nur für den alltäglichen Verzehr attraktiv, sondern auch für den Einsatz bei besonderen Anlässen oder als exklusives Angebot im Snackmarkt.

Gemäß einer Weiterbildung der Erfindung besteht die Schokoladenschicht aus Vollmilchschokolade, Zartbitterschokolade, weißer Schokolade oder einer Mischung davon. Diese Weiterbildung der Erfindung bietet vielfältige Vorteile und Funktionen, die sich auf Geschmack, Variabilität, Zielgruppenansprache und Marktpotenzial des Produkts auswirken.

Ein zentraler Vorteil dieser Weiterbildung liegt in der geschmacklichen Vielfalt, die durch die Wahl zwischen verschiedenen Schokoladensorten geschaffen wird. Jede Schokoladensorte hat ihre spezifischen Eigenschaften und spricht unterschiedliche Geschmacksvorlieben an. Vollmilchschokolade bietet eine milde, cremige Süße, die besonders beliebt ist und einen angenehmen Kontrast zur salzigen Note des Laugengebäcks bildet. Zartbitterschokolade hingegen hat eine intensivere, weniger süße Geschmacksnote, die sich durch ihren höheren Kakaoanteil auszeichnet. Diese Variante spricht besonders Konsumenten an, die einen edlen, leicht herben Geschmack bevorzugen und eine Alternative zu den meist süßeren Snacks suchen. Weiße Schokolade schließlich bringt durch ihre milchige, fast karamellige Süße eine besondere Raffinesse in das Produkt und hebt sich durch ihre helle Farbe auch optisch deutlich ab.

Die Möglichkeit, Mischungen aus verschiedenen Schokoladensorten zu verwenden, eröffnet weitere kreative Spielräume. Durch die Kombination von Vollmilch-, Zartbitter- und weißer Schokolade können einzigartige Geschmacksprofile entstehen, die das Produkt noch vielseitiger machen. Beispielsweise könnten zweischichtige Überzüge entwickelt werden, bei denen eine Sorte die innere und eine andere die äußere Schicht bildet. Solche Mischungen bieten nicht nur geschmacklich, sondern auch visuell ein ansprechendes und differenziertes Erlebnis, das das Produkt aufwertet und von anderen Snacks abhebt.

Diese Vielfalt in der Auswahl der Schokoladensorten ermöglicht es, das Produkt gezielt auf unterschiedliche Zielgruppen abzustimmen. Während Vollmilchschokolade traditionell eine breite Masse anspricht, einschließlich Kinder und jüngerer Verbraucher, sind Zartbitterschokolade und weiße Schokolade oft bei Erwachsenen und Feinschmeckern beliebt, die nach spezifischen Geschmacksrichtungen suchen. Durch die Möglichkeit, verschiedene Varianten anzubieten, kann das Produkt sowohl in Massenmärkten als auch in spezialisierten Nischen erfolgreich platziert werden.

Ein weiterer Vorteil der Wahlmöglichkeit zwischen den Schokoladensorten liegt in der Anpassungsfähigkeit an verschiedene Anlässe und Verwendungszwecke. Vollmilchschokolade eignet sich beispielsweise hervorragend für den alltäglichen Genuss, während Zartbitterschokolade oft als edler und gehobener wahrgenommen wird und damit ideal für besondere Anlässe oder als Geschenk geeignet ist. Weiße Schokolade hingegen kann mit ihrem süßen und luxuriösen Geschmack einen Hauch von Exklusivität vermitteln und eignet sich gut für festliche Gelegenheiten oder als besonderes Highlight in einer Produktlinie.

Neben den geschmacklichen und zielgruppenorientierten Vorteilen bringt die Verwendung unterschiedlicher Schokoladensorten auch praktische Vorteile im Produktions- und Marketingprozess mit sich. Durch die Einführung verschiedener Varianten innerhalb derselben Produktkategorie können Hersteller eine größere Produktvielfalt anbieten, ohne grundlegende Änderungen am Produktionsprozess vornehmen zu müssen. Dies reduziert Kosten und erhöht gleichzeitig die Attraktivität des Produkts, da Verbraucher aus einem breiten Sortiment wählen können. Zudem können durch die Wahl der Schokoladensorte regionale Vorlieben berücksichtigt werden. In Ländern, in denen Zartbitterschokolade bevorzugt wird, kann diese dominieren, während in anderen Märkten Vollmilch- oder weiße Schokolade stärker vertreten sein könnten.

Schließlich trägt diese Vielfalt auch zur optischen Attraktivität des Produkts bei. Die unterschiedlichen Farben der Schokoladensorten - von dem satten Braun der Vollmilchschokolade über das tiefdunkle Braun der Zartbitterschokolade bis hin zum cremigen Weiß der weißen Schokolade - sorgen für visuelle Abwechslung und ermöglichen es, das Produkt ansprechend und abwechslungsreich zu präsentieren. Dies macht es insbesondere in durchsichtigen Verpackungen oder auf Buffets zu einem Blickfang, der die Aufmerksamkeit potenzieller Kunden auf sich zieht.

Gemäß einer Weiterbildung der Erfindung ist der Schokoladenüberzug zusätzlich mit Gewürzen, Nüssen und/oder Fruchtstückchen versehen. Diese Ergänzungen verleihen dem Snack nicht nur eine erweiterte Geschmacksdimension, sondern erhöhen auch seinen sensorischen und optischen Reiz sowie seine Vielseitigkeit im Markt.

Ein wesentlicher Vorteil dieser Weiterbildung liegt in der geschmacklichen Vielfalt, die durch die Zugabe von Gewürzen, Nüssen und Fruchtstückchen erreicht wird. Gewürze wie Zimt, Chili, Vanille oder Kardamom können dem Schokoladenüberzug einzigartige Geschmacksnuancen verleihen, die das harmonische Zusammenspiel von süßer Schokolade und salzigem Laugengebäck noch weiter bereichern. Zimt sorgt beispielsweise für eine warme, leicht süßliche Note, die insbesondere in der kalten Jahreszeit geschätzt wird, während Chili einen dezenten Schärfeeffekt hinzufügt, der den Geschmack aufregender und intensiver macht. Solche Gewürze eröffnen Möglichkeiten, das Produkt gezielt auf saisonale Trends oder bestimmte Marktsegmente abzustimmen.

Die Zugabe von Nüssen wie Mandeln, Haselnüssen oder Pistazien verleiht dem Snack zusätzlich eine knackige Textur und einen nussigen Geschmack, der hervorragend mit der Schokolade harmoniert. Gleichzeitig bieten Nüsse eine zusätzliche Quelle für wertvolle Nährstoffe wie Proteine, ungesättigte Fettsäuren und Vitamine, was das Produkt nicht nur geschmacklich, sondern auch ernährungsphysiologisch attraktiver macht. Mandeln beispielsweise bringen eine milde Süße und eine angenehme Bissfestigkeit, während Pistazien mit ihrem leicht würzigen Geschmack und ihrer auffälligen grünen Farbe auch optisch einen Mehrwert bieten.

Fruchtstückchen wie getrocknete Beeren, Orangen- oder Zitronenzesten oder exotische Früchte wie Mango oder Ananas bieten eine fruchtige Note, die das Geschmacksprofil des Snacks zusätzlich bereichert. Sie bringen eine natürliche Süße und manchmal eine leichte Säure mit, die die Cremigkeit der Schokolade und die herzhafte Note des Laugengebäcks wunderbar ausbalancieren. Besonders getrocknete Beeren wie Cranberrys sind beliebt, da sie nicht nur geschmacklich überzeugen, sondern auch mit ihrer leuchtenden Farbe visuell ansprechend sind.

Diese zusätzlichen Zutaten erhöhen nicht nur den Genusswert des Produkts, sondern erweitern auch dessen Vielseitigkeit und Zielgruppenansprache. Die Kombination verschiedener Geschmacksrichtungen und Texturen - von süß und herzhaft über knackig bis fruchtig - macht den Snack zu einem vielseitigen Produkt, das unterschiedliche Vorlieben bedienen kann. Verbraucher, die nach besonderen und abwechslungsreichen Snackoptionen suchen, finden in dieser Weiterentwicklung ein Produkt, das ihre Erwartungen übertrifft. Zudem ermöglicht die Vielfalt an möglichen Zutaten die Entwicklung von Produktlinien, die gezielt auf bestimmte Geschmackspräferenzen oder Anlässe abgestimmt sind, wie zum Beispiel "winterlich gewürzt" mit Zimt und Kardamom oder "sommerlich fruchtig" mit Mango- und Ananasstückchen.

Ein weiterer Vorteil dieser Weiterbildung ist die sensorische Bereicherung des Produkts. Die verschiedenen Texturen - von der knusprigen Basis des Laugengebäcks über die glatte Schokolade bis hin zu den knackigen Nüssen oder weichen Fruchtstückchen - sorgen für ein einzigartiges Mundgefühl. Jeder Biss bietet eine neue Kombination von Geschmack und Konsistenz, was den Snack besonders ansprechend und abwechslungsreich macht.

Auch optisch wird das Produkt durch diese Zutaten aufgewertet. Die bunten Farben von Fruchtstückchen, das glänzende Braun von Nüssen oder die feinen Gewürzpartikel auf der Schokolade verleihen dem Snack eine attraktive, hochwertige Anmutung, die die Aufmerksamkeit der Verbraucher auf sich zieht. Besonders bei offenen oder durchsichtigen Verpackungen wird dieser optische Reiz zu einem entscheidenden Verkaufsargument.

Darüber hinaus tragen die zusätzlichen Zutaten zur Wahrnehmung des Produkts als hochwertig und innovativ bei. Gewürze, Nüsse und Früchte gelten als exklusive und geschätzte Zutaten, die in der Snack-Industrie oft als Zeichen für Premiumqualität wahrgenommen werden. Dies stärkt das Image des Produkts und erlaubt es, es in einem höherpreisigen Marktsegment zu positionieren.

Nicht zuletzt ermöglicht diese Erweiterung eine Anpassung an aktuelle Ernährungstrends und Verbraucherwünsche. Die Nachfrage nach Snacks mit natürlichen Zutaten, exotischen Aromen und ernährungsphysiologischen Vorteilen wächst stetig. Durch die Zugabe von Nüssen und Früchten sowie die Möglichkeit, natürliche Gewürze zu verwenden, kann das Produkt gezielt auf diese Trends eingehen und sich von Wettbewerbern abheben.

Gemäß einer Weiterbildung der Erfindung weisen die Stücke jeweilige Größen von 5 bis 30 Millimetern auf. Gemeint ist hier die maximale Erstreckung in eine Richtung. Ein zentraler Vorteil dieser Größenwahl liegt in der Mundgerechtigkeit der Stücke. Mit einer Größe von 5 bis 30 Millimetern sind die Stücke so dimensioniert, dass sie bequem in einem Bissen konsumiert werden können. Dies macht den Snack besonders alltagstauglich und praktisch, da kein zusätzliches Schneiden oder Teilen erforderlich ist. Die mundgerechte Form erleichtert den Verzehr in verschiedensten Situationen, sei es unterwegs, bei der Arbeit oder in gesellschaftlichen Kontexten. Sie trägt dazu bei, dass der Snack unkompliziert und sauber konsumiert werden kann, was insbesondere bei Snacks für unterwegs ein wichtiges Kriterium ist.

Die Größenwahl trägt auch zur Wahrnehmung der Textur und des Geschmacks des Produkts bei. Bei kleineren Stücken von etwa 5 Millimetern wird der Fokus stärker auf den Schokoladenüberzug gelegt, wodurch die cremige Textur und der süße Geschmack der Schokolade intensiver zur Geltung kommen. Größere Stücke, die bis zu 30 Millimeter messen, bieten hingegen eine ausgewogenere Kombination von Schokolade und Laugengebäck, da die Struktur und der herzhafte Geschmack des Gebäcks deutlicher wahrgenommen werden. Durch diese Bandbreite an Größen kann das Produkt so gestaltet werden, dass unterschiedliche Vorlieben bedient werden - von schokoladenbetonten bis zu stärker herzhaft geprägten Varianten.

Darüber hinaus sorgt die Größenvielfalt innerhalb des Bereichs von 5 bis 30 Millimetern für eine ansprechende Haptik und Optik. Unterschiedliche Größen innerhalb einer Verpackung können das Produkt abwechslungsreicher wirken lassen und einen Eindruck von Natürlichkeit und Handwerkskunst vermitteln, da die Stücke nicht völlig gleichförmig erscheinen. Dies spricht Verbraucher an, die Wert auf ein authentisches, nicht zu stark industriell anmutendes Produkt legen. Gleichzeitig ist die gewählte Größenordnung klein genug, um als Snack handlich und kompakt zu bleiben, aber groß genug, um ein zufriedenstellendes Mundgefühl zu bieten.

Ein weiterer wichtiger Vorteil dieser Größenwahl ist die Vielseitigkeit des Produkts. Mit Stücken in diesem Bereich eignet sich der Snack für zahlreiche Anwendungsbereiche. Kleinere Stücke können beispielsweise hervorragend als Topping für Desserts, Eiscreme oder Kuchen verwendet werden, während größere Stücke sich gut für den direkten Verzehr als eigenständiger Snack eignen. Die Größenvielfalt ermöglicht es auch, das Produkt in verschiedenen Verpackungs- und Präsentationsformaten anzubieten, wie etwa in kleinen Portionsbeuteln für unterwegs oder in größeren Behältern für den Gemeinschaftsgebrauch bei Feiern oder in Familienhaushalten.

Die Größe der Stücke trägt zudem zur optimalen Beschichtung mit Schokolade bei. Mit einer Länge von 5 bis 30 Millimetern sind die Stücke groß genug, um vollständig mit einer gleichmäßigen Schokoladenschicht überzogen zu werden, ohne dass die Schokoladenhülle zu dünn oder ungleichmäßig wird. Dies verbessert nicht nur die Haltbarkeit des Produkts, da die Schokoladenschicht die Stücke vor äußeren Einflüssen schützt, sondern sorgt auch für ein ansprechendes sensorisches Erlebnis, da die Kombination aus knusprigem Kern und glatter Schokolade in jeder Größe harmonisch bleibt.

Die gewählte Größenordnung bietet zudem praktische Vorteile im Herstellungsprozess. Stücke in diesem Bereich lassen sich effizient zerkleinern, trocknen und beschichten, ohne dass es zu einem übermäßigen Bruch oder Materialverlust kommt. Dies erhöht die Produktionsausbeute und reduziert Abfälle, was wirtschaftlich vorteilhaft ist. Gleichzeitig sind Stücke dieser Größe leicht zu sieben und zu sortieren, wodurch eine gleichbleibende Qualität und Konsistenz des Endprodukts sichergestellt werden können.

Gemäß einer Weiterbildung der Erfindung weist die Oberfläche der Schokoladenschicht eine unregelmäßige Struktur auf, die durch die Form des zerkleinerten Laugengebäcks gegeben ist. Ein zentraler Vorteil dieser unregelmäßigen Struktur ist die optische Anziehungskraft, die sie dem Produkt verleiht. Im Gegensatz zu glatten, gleichförmigen Schokoladenüberzügen, wie sie bei vielen industriell gefertigten Snacks üblich sind, hebt sich die unregelmäßige Oberfläche deutlich ab und vermittelt einen Eindruck von Individualität und Handwerkskunst. Die unregelmäßige Struktur macht das Produkt visuell interessant und einzigartig, was es für Verbraucher attraktiver macht, die nach authentischen, weniger standardisierten Produkten suchen. Diese Eigenschaft hebt das Produkt von konventionellen Snacks ab und positioniert es als hochwertig und innovativ.

Auch sensorisch bringt die unregelmäßige Struktur klare Vorteile mit sich. Die variierende Oberfläche der Schokoladenschicht sorgt für eine interessante Haptik, die beim Anfassen und Verzehr des Snacks wahrgenommen wird. Diese Textur wird als angenehm und abwechslungsreich empfunden und trägt dazu bei, das Esserlebnis spannender zu gestalten. Die unregelmäßigen Kanten und Erhebungen erzeugen zudem beim Kauen ein besonderes Mundgefühl, da sie kleine Unterschiede in der Schokoladenstärke und dem darunterliegenden Laugengebäck bieten. Dies schafft einen dynamischen Kontrast, der den Genusswert des Produkts erheblich steigert.

Ein weiterer Vorteil der unregelmäßigen Oberfläche ist, dass sie die handwerkliche Natur der Herstellung betont. Die unregelmäßige Struktur entsteht durch die natürliche Form der zerkleinerten Laugengebäckstücke, die nicht maschinell homogenisiert werden, sondern in ihrer ursprünglichen, individuellen Beschaffenheit bleiben. Diese Eigenschaft vermittelt dem Verbraucher ein Gefühl von Authentizität und Qualität, da die Produktion auf die besonderen Eigenschaften des Ausgangsprodukts eingeht und keine künstliche Standardisierung vorgenommen wird. Dies kann insbesondere bei Verbrauchern, die Wert auf Natürlichkeit und Individualität legen, eine Kaufentscheidung positiv beeinflussen.

Die unregelmäßige Struktur bietet zudem praktische Vorteile im Herstellungsprozess. Da die Schokoladenschicht die natürliche Form des zerkleinerten Laugengebäcks übernimmt, entfällt die Notwendigkeit, die Stücke vor der Beschichtung in eine einheitliche Form zu bringen. Dies vereinfacht den Produktionsprozess und reduziert die Herstellungskosten, da keine zusätzlichen Schritte für das Angleichen oder Formen der Stücke erforderlich sind. Gleichzeitig wird sichergestellt, dass die Schokoladenschicht gleichmäßig aufgetragen wird, unabhängig von der individuellen Form der Stücke, was die Qualität des Endprodukts gewährleistet.

Darüber hinaus hat die unregelmäßige Struktur auch praktische Auswirkungen auf die Verpackung und den Transport des Produkts. Die variierende Oberfläche sorgt für eine natürliche Verzahnung der Stücke, wodurch sie sich besser in der Verpackung verteilen und stabiler lagern lassen. Dies reduziert das Risiko, dass die Stücke während des Transports oder der Lagerung beschädigt werden, und trägt dazu bei, dass das Produkt in einwandfreiem Zustand beim Verbraucher ankommt.

Die unregelmäßige Oberfläche kann zudem dazu beitragen, den Geschmack und die Wahrnehmung der Schokolade zu optimieren. Erhebungen und Vertiefungen in der Schokoladenschicht sorgen für Unterschiede in der Dicke der Schokolade, die bei jedem Bissen für eine abwechslungsreiche Verteilung des Geschmacks sorgen. Diese Variation wird von vielen Verbrauchern als besonders reizvoll empfunden, da sie das Esserlebnis weniger monoton macht und den Genusswert steigert.

Gemäß einer alternativen Weiterbildung der Erfindung weist die Oberfläche der Schokoladenschicht eine regelmäßige Struktur auf, aufgrund derer die Form des zerkleinerten Laugengebäcks nicht mehr zu erkennen ist. Die regelmäßige Struktur kann eine kugelrunde Form sein. Ein wesentlicher Vorteil einer regelmäßigen Struktur liegt in der optischen Attraktivität und Einheitlichkeit, die sie dem Produkt verleiht. Kugelrunde Formen gelten als ästhetisch ansprechend, da sie symmetrisch und harmonisch wirken. Diese einheitliche Optik hebt das Produkt visuell von anderen Snacks ab, die oft unregelmäßige oder zufällige Formen aufweisen. Insbesondere bei der Präsentation in transparenten Verpackungen oder bei losem Verkauf sorgt die regelmäßige Form für ein hochwertiges und professionelles Erscheinungsbild, das das Interesse der Verbraucher weckt und das Produkt als Premium-Option wahrnehmen lässt.

Darüber hinaus bietet die regelmäßige Struktur praktische Vorteile in der Handhabung. Eine kugelrunde Form lässt sich leichter greifen und konsumieren, was das Produkt besonders benutzerfreundlich macht. Diese Eigenschaft ist vor allem bei Snacks für unterwegs oder bei gesellschaftlichen Anlässen von Vorteil, bei denen Sauberkeit und einfache Handhabung wichtig sind. Die einheitliche Größe und Form erleichtert zudem das Verpacken, da sich die Stücke besser stapeln oder verteilen lassen, was den Verpackungsprozess effizienter macht und das Risiko von Beschädigungen während Transport und Lagerung verringert.

Ein weiterer wichtiger Aspekt der regelmäßigen Struktur ist die Möglichkeit, das Produkt in unterschiedlichen Kontexten und Anwendungen zu verwenden. Kugelförmige Snacks sind vielseitig einsetzbar, beispielsweise als dekoratives Element auf Buffets, als Beilage zu Desserts oder sogar als Bestandteil von Geschenksets. Die kugelrunde Form macht das Produkt auch für Kinder besonders ansprechend, da sie spielerische Assoziationen weckt und den Snack zu einem unterhaltsamen Genuss macht.

Die regelmäßige Form bietet zudem Vorteile im Hinblick auf die Wahrnehmung und das Image des Produkts. Kugelrunde Snacks werden häufig mit Sorgfalt und Präzision in der Herstellung assoziiert, was den Eindruck von hoher Qualität und Raffinesse vermittelt. Diese Eigenschaft macht das Produkt besonders geeignet für den Einsatz in gehobenen Marktsegmenten oder als Teil einer exklusiven Produktlinie. Gleichzeitig wirkt die regelmäßige Form moderner und stilisierter, was es attraktiv für Verbrauchergruppen macht, die Wert auf Design und Ästhetik legen.

Auch der Produktionsprozess profitiert von der regelmäßigen Struktur. Die Herstellung einer gleichmäßigen, kugelrunden Schokoladenschicht kann durch kontrollierte Verfahren wie das Formen oder das Überziehen in speziellen Formen erreicht werden, was eine standardisierte und reproduzierbare Qualität sicherstellt. Diese Konsistenz reduziert Produktionsverluste und erleichtert die Einhaltung von Qualitätsstandards, was sowohl wirtschaftliche als auch funktionale Vorteile bietet.

Ein weiterer Vorteil der regelmäßigen Struktur ist die Optimierung des Geschmackserlebnisses. Die kugelrunde Form ermöglicht eine gleichmäßige Verteilung der Schokolade um das Laugengebäck, wodurch bei jedem Bissen ein konsistenter Geschmack gewährleistet wird. Die gleichmäßige Schichtdicke sorgt dafür, dass sowohl die Schokolade als auch das Laugengebäck in idealem Verhältnis wahrgenommen werden, was den Genusswert des Snacks steigert. Zudem bietet die glatte Oberfläche eine angenehme Haptik im Mund, was das sensorische Erlebnis weiter verbessert.

Die Erfindung betrifft auch eine Snackmischung, umfassend Laugenschokoladegebäck der zuvor beschriebenen Art kombiniert mit nicht mit Schokolade überzogenen Laugenstücken. Die Erweiterung der Erfindung um eine Snackmischung, die Laugenschokoladegebäck mit nicht mit Schokolade überzogenen Laugenstücken kombiniert, erweitert die Einsatzmöglichkeiten des Produkts erheblich. Diese Kombination schafft ein vielseitiges Snackangebot, das unterschiedliche Geschmackspräferenzen und Konsumanlässe anspricht und dabei sowohl sensorische als auch praktische und ernährungsbezogene Vorteile bietet.

Ein wesentlicher Vorteil dieser Snackmischung liegt in der geschmacklichen Vielfalt, die sie durch die Kombination von süßem und herzhaftem Gebäck bietet. Das Laugenschokoladegebäck verbindet die süße, cremige Note der Schokolade mit der leicht salzigen Basis des Laugengebäcks, während die nicht mit Schokolade überzogenen Laugenstücke eine reine herzhafte Komponente beisteuern. Diese Mischung aus süßen und salzigen Elementen schafft ein ausgewogenes Geschmackserlebnis, das für viele Verbraucher besonders ansprechend ist, da es den Reiz der Gegensätze aufgreift. Die Möglichkeit, zwischen süßen und herzhaften Stücken zu wechseln oder beide Geschmacksrichtungen in einem Bissen zu kombinieren, sorgt für Abwechslung und erhöht den Genusswert des Snacks.

Darüber hinaus bietet diese Snackmischung eine breite Zielgruppenansprache. Während einige Verbraucher vorrangig süße Snacks bevorzugen, schätzen andere herzhafte Alternativen. Die Kombination beider Varianten in einer Mischung ermöglicht es, unterschiedliche Vorlieben gleichzeitig zu bedienen, was das Produkt für Haushalte, Büros oder gesellschaftliche Anlässe besonders attraktiv macht. Zudem eignet sich die Mischung hervorragend für Situationen, in denen verschiedene Geschmäcker zusammenkommen, da sie eine Lösung bietet, die beiden Vorlieben gerecht wird.

Ein weiterer Vorteil liegt in der sensorischen Abwechslung, die durch die unterschiedliche Textur der Bestandteile entsteht. Die mit Schokolade überzogenen Laugenstücke bieten eine glatte, cremige Oberfläche, kombiniert mit der knusprigen Konsistenz des Laugenkerns. Die nicht überzogenen Laugenstücke hingegen haben eine reine, knusprige Textur, die den herzhaften Charakter des Laugengebäcks betont. Diese Variation in der Textur trägt dazu bei, das Snack-Erlebnis interessanter und vielseitiger zu gestalten.

Auch in praktischer Hinsicht bringt die Snackmischung Vorteile mit sich. Die nicht mit Schokolade überzogenen Laugenstücke sind weniger empfindlich gegenüber äußeren Einflüssen wie Wärme, was die Stabilität und Haltbarkeit der gesamten Mischung erhöht. Sie können auch dazu beitragen, dass die Schokoladenstücke nicht aneinanderhaften, was die Handhabung des Produkts erleichtert. Zudem kann die Kombination verschiedener Stücke zu einer optisch ansprechenden Präsentation führen, die das Interesse der Verbraucher weckt und das Produkt attraktiver macht, insbesondere in durchsichtigen Verpackungen.

Ein weiterer Vorteil dieser Mischung ist die Möglichkeit, sie flexibel auf unterschiedliche Märkte und Verzehranlässe abzustimmen. Die Anteile von Laugenschokoladegebäck und nicht überzogenen Laugenstücken können variieren, um verschiedene Präferenzen zu bedienen. Für einen süßeren Schwerpunkt könnte der Anteil der Schokoladenstücke höher sein, während für eine herzhaftere Mischung die unüberzogenen Stücke dominieren könnten. Diese Anpassungsfähigkeit ermöglicht es, die Snackmischung gezielt auf bestimmte Zielgruppen oder regionale Geschmäcker abzustimmen.

Die Snackmischung bietet zudem ernährungsbezogene Vorteile. Während die Schokoladenstücke den Energiegehalt und den süßen Genuss liefern, bieten die unüberzogenen Laugenstücke eine leichtere, weniger kalorienreiche Alternative. Diese Kombination kann dazu beitragen, das Produkt als ausgewogenen Snack wahrzunehmen, der sowohl Genuss als auch einen gewissen Anspruch an eine bewusstere Ernährung erfüllt.

Die Erfindung betrifft auch eine Verpackungseinheit, umfassend Laugenschokoladegebäck der zuvor beschriebenen Art, wobei die Stücke nach Größenbereichen gesiebt und in separaten Kammern oder Verpackungen enthalten sind. Diese innovative Verpackungslösung adressiert wichtige Aspekte wie Benutzerfreundlichkeit, Zielgruppenansprache, Produktpräsentation und Qualitätssicherung.

Ein wesentlicher Vorteil dieser Verpackungseinheit liegt in der übersichtlichen und organisierten Präsentation des Produkts. Die Trennung der Laugenschokoladegebäckstücke nach Größenbereichen ermöglicht es dem Verbraucher, gezielt die gewünschte Größe auszuwählen, sei es für den direkten Verzehr, die Verwendung als Topping oder für andere spezifische Anwendungen. Dies macht die Verpackung besonders praktisch für Haushalte, in denen unterschiedliche Vorlieben bestehen, oder für Verbraucher, die das Produkt für verschiedene Zwecke nutzen möchten. Durch die klare Unterteilung der Größenbereiche entsteht ein strukturierter Eindruck, der den Premium-Charakter des Produkts unterstreicht.

Die Separierung der Stücke in unterschiedlichen Kammern oder Verpackungen trägt auch dazu bei, dass das Produkt seine Qualität und Konsistenz besser bewahrt. Kleinere Stücke können beispielsweise empfindlicher sein und schneller zerbrechen, während größere Stücke stabiler sind. Die Trennung verhindert, dass die kleineren Stücke während des Transports oder der Lagerung durch größere Stücke beschädigt werden. Dadurch bleibt die ästhetische und sensorische Qualität des Produkts erhalten, was besonders wichtig ist, um die Attraktivität des Snacks zu gewährleisten.

Ein weiterer Vorteil dieser Verpackungseinheit liegt in der erhöhten Benutzerfreundlichkeit. Der Verbraucher kann gezielt auf die gewünschte Kammer oder Verpackung zugreifen, ohne alle Größen gleichzeitig öffnen oder mischen zu müssen. Dies trägt nicht nur zur Frische des Produkts bei, sondern erlaubt auch eine flexiblere Nutzung, beispielsweise das Mitnehmen einzelner Portionsgrößen. Besonders für den Einsatz unterwegs oder in sozialen Situationen, wie beim Teilen des Snacks, ist diese Flexibilität ein klarer Mehrwert.

Auch in der Produktpräsentation bietet die Verpackung entscheidende Vorteile. Eine Verpackung mit separaten Kammern oder Behältnissen wirkt optisch ansprechend und hebt das Produkt von herkömmlichen, lose gemischten Snacks ab. Besonders in transparenten oder teiltransparenten Verpackungen kommt die Sortierung der Größenbereiche gut zur Geltung und weckt das Interesse der Verbraucher. Dies kann das Produkt als hochwertig und durchdacht positionieren, was insbesondere im gehobenen Marktsegment ein entscheidender Wettbewerbsvorteil sein kann.

Darüber hinaus ermöglicht die Trennung nach Größenbereichen eine gezielte Ansprache unterschiedlicher Zielgruppen und Verwendungszwecke. Kleine Stücke könnten beispielsweise als Topping für Desserts oder Eiscreme beworben werden, während größere Stücke sich ideal für den direkten Verzehr eignen. Die Verpackung könnte entsprechend gestaltet werden, um diese unterschiedlichen Einsatzmöglichkeiten zu kommunizieren, wodurch das Produkt für eine breitere Verbraucherbasis interessant wird.

Auch aus logistischer Sicht bietet die Verpackung Vorteile. Die Trennung der Größenbereiche erleichtert es den Herstellern, gezielt auf Kundenwünsche oder Marktanforderungen einzugehen, indem beispielsweise Verpackungen mit einem höheren Anteil bestimmter Größen angeboten werden. Zudem ermöglicht die klare Trennung eine einfachere Qualitätskontrolle und reduziert die Wahrscheinlichkeit, dass ungewollte Bruchstücke oder Fehlgrößen in der Endverpackung landen.

Nachfolgend wir die Erfindung anhand bevorzugter Ausführungsbeispiele unter Bezugnahme auf die Zeichnungen weiter im Detail erläutert.

In den Zeichnungen zeigen
- Fig. 1: schematisch ein Stück Laugenschokoladegebäck gemäß einer ersten Ausführungsform der Erfindung und
- Fig. 2: schematisch mehrere Stücke Laugenschokoladegebäck gemäß einer zweiten Ausführungsform der Erfindung.

Die Herstellung von Laugenschokoladegebäck gemäß bevorzugter Ausführungsformen der Erfindung, umfasst mehrere aufeinander folgende Schritte, um zerkleinerte und getrocknete Stücke von Laugengebäck mit einer vorzugsweise sehr gleichmäßigen Schokoladenschicht zu überziehen. Dies wird nachfolgend exemplarisch geschildert.

Zunächst wird echtes Laugengebäck als Ausgangsprodukt ausgewählt, wobei traditionell gebackene Varianten wie Laugenbrezeln, Laugenknoten, Laugenbrötchen oder Laugenstangen verwendet werden. Hilfreich ist es, wenn das Laugengebäck von hoher Qualität ist, um den charakteristischen Geschmack und die Textur zu erhalten.

Das Laugengebäck wird dann in kleinere Stücke zerkleinert, die eine durchschnittliche Größe zwischen 5 und 30 Millimetern aufweisen. Dies kann durch Schneiden, Zerreißen oder Schreddern erfolgen, um unregelmäßige Formen zu schaffen, die später für eine interessante Textur beim Überziehen mit Schokolade sorgen. Die Stücke werden anschließend getrocknet, um ihren Feuchtigkeitsgehalt zu reduzieren. Dieser Schritt verlängert die Haltbarkeit und sorgt dafür, dass die Schokolade gut haftet. Für die Trocknung eignen sich Methoden wie Warmluft- oder Vakuumtrocknung, bei denen die Temperatur und Dauer so gewählt werden, dass die Stücke knusprig bleiben, ohne brüchig zu werden.

Parallel kann bereits die Schokolade vorbereitet werden. Diese wird zunächst temperiert, um eine gleichmäßige Konsistenz und einen ansprechenden Glanz zu gewährleisten. Hierzu wird die Schokolade in mehreren Phasen erhitzt, abgekühlt und wieder leicht erwärmt, um die gewünschte Verarbeitungstemperatur zu erreichen. Je nach gewünschter Produktvariante kann Vollmilch-, Zartbitter- und/oder weiße Schokolade verwendet werden.

Die getrockneten Laugengebäckstücke werden mit der temperierten Schokolade überzogen, wofür verschiedene Verfahren eingesetzt werden können. Im Trommelverfahren werden die Stücke in eine rotierende Trommel gegeben, in der sie mit Schokolade besprüht oder begossen werden, während durch die Rotation eine gleichmäßige Verteilung erreicht wird. Alternativ können die Stücke durch ein Schokoladenbad geführt oder die Schokolade aufgesprüht werden, um unterschiedliche Schichtdicken zu erzeugen. Wichtig ist, dass die Stücke vollständig mit Schokolade überzogen werden, ohne sie übermäßig zu beschweren.

Nach dem Überziehen wird die Schokolade abgekühlt, damit sie aushärtet und eine feste, glänzende Oberfläche bildet. Dies geschieht z. B. in Kühlräumen oder auf speziellen Förderbändern mit integrierten Kühlzonen. Optional kann die Schokoladenschicht durch das Aufstreuen von Gewürzen, Nüssen oder Fruchtstückchen weiter veredelt werden, solange die Schokolade noch nicht ausgehärtet ist. Auch Kombinationen mit mehreren Schokoladensorten sind möglich, um visuelle und geschmackliche Vielfalt zu schaffen.

Die fertig überzogenen und ausgehärteten Stücke werden gesiebt und nach Größenbereichen sortiert. Kleinere Stücke können als Toppings verwendet werden, während größere Stücke für den direkten Verzehr vorgesehen sind. Diese Sortierung gewährleistet eine einheitliche Produktqualität. Die Stücke werden anschließend in geeignete Verpackungseinheiten abgefüllt, die je nach Kundenwunsch unterschiedliche Größenbereiche kombinieren können. Flexible Beutel mit Sichtfenstern oder hochwertige Kartonverpackungen bieten verschiedene Optionen für die Vermarktung. Die Verpackung erfolgt idealerweise unter Schutzatmosphäre, um Frische und Haltbarkeit zu gewährleisten.

Das fertige Produkt wird schließlich bei kontrollierter Temperatur und niedriger Luftfeuchtigkeit gelagert, um die Qualität über einen längeren Zeitraum sicherzustellen. Der Vertrieb kann über den Einzelhandel, Online-Plattformen oder als Spezialprodukt in Feinkostgeschäften erfolgen. Dieses Verfahren ermöglicht es, ein hochwertiges Laugenschokoladegebäck herzustellen, das durch seinen Geschmack, seine Konsistenz und seine optische Attraktivität überzeugt, während es gleichzeitig effizient und wirtschaftlich produziert wird.

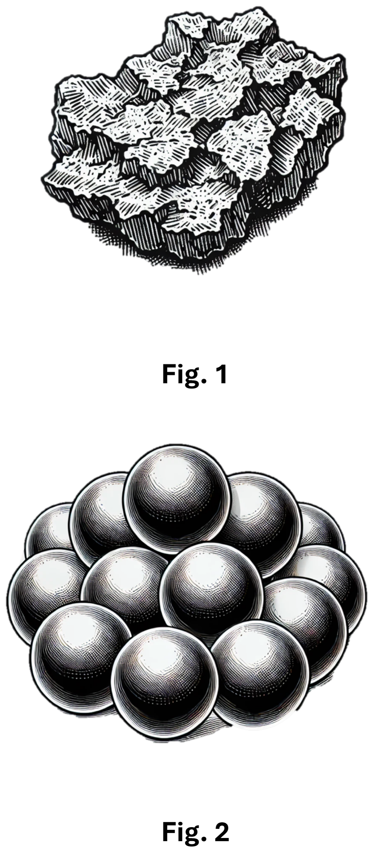

Auf diese Weise sind verschiedene Arten von Laugenschokoladegebäck herstellbar, wie in den Fig. 1 und 2 dargestellt. Fig. 1 zeigt ein Stück Laugenschokoladegebäck, das vollständig und relativ dünn mit weißer Schokolade überzogen worden ist. Hier weist die Oberfläche der Schokoladenschicht eine unregelmäßige Struktur auf, die durch die Form des zerkleinerten Laugengebäcks gegeben ist. In der Fig. 2 ist Laugenschokoladegebäck mit einer annährend kugelrunden Form gezeigt. Hier ist die Schokoladenschicht dicker und gibt die kugelrunde Form vor.

Freilich gibt es weitere Optionen für die Herstellung noch anderer Arten von Laugenschokoladegebäck. Die Herstellung von erfindungsgemäßem Laugenschokoladegebäck bietet zahlreiche Variationsmöglichkeiten, die durch gezielte Anpassungen im Produktionsprozess umgesetzt werden können. Eine dieser Optionen besteht darin, verschiedene Schokoladensorten wie Vollmilch-, Zartbitter- oder weiße Schokolade oder Mischungen dieser Sorten zu verwenden. Jede Schokoladensorte erfordert eine individuelle Temperierung, da die Verarbeitungstemperaturen variieren. So wird beispielsweise Vollmilchschokolade bei 30 - 32 °C, Zartbitterschokolade bei 31 - 33 °C und weiße Schokolade bei 29 - 30 °C verarbeitet. Mischungen können durch das Vermengen der geschmolzenen Schokoladensorten vor dem Überziehen oder durch das Auftragen mehrerer Schichten erreicht werden. Bei der Schichttechnik wird die erste Schicht aufgetragen und ausgehärtet, bevor eine zweite Schokoladensorte aufgebracht wird, wodurch eine visuelle und geschmackliche Vielfalt entsteht.

Eine weitere Option besteht darin, die Schokoladenüberzüge mit zusätzlichen Zutaten wie Gewürzen, Nüssen oder Fruchtstückchen zu veredeln. Gewürze wie Zimt, Chili oder Vanille werden in Pulverform gleichmäßig auf die noch flüssige Schokolade aufgetragen, um sie gut haften zu lassen. Nüsse, ob gehackt, geröstet oder karamellisiert, werden manuell oder maschinell aufgestreut. Fruchtstückchen wie getrocknete Beeren oder Zitruszesten können vorbereitet und entweder einzeln oder in Mischungen aufgebracht werden. Um die Haftung zu optimieren, wird bei Bedarf eine dünne Schicht zusätzlicher Schokolade als Klebemittel verwendet. Der Zeitpunkt des Auftragens ist entscheidend, da die Schokolade noch nicht vollständig ausgehärtet sein darf, aber bereits fest genug sein muss, um das Einsinken der Zutaten zu verhindern.

Die Größe der zerkleinerten Laugengebäckstücke variiert vorzugsweise zwischen 5 und 30 Millimetern, was eine präzise Steuerung des Zerkleinerungs- und Siebprozesses erfordert. Um kleinere Stücke zu erzeugen, werden engmaschige Siebe eingesetzt, während für größere Stücke grobmaschige Siebe verwendet werden. Nach dem Sieben können die Stücke nach Größe sortiert oder gemischt verarbeitet werden. Kleinere Stücke erfordern besondere Aufmerksamkeit beim Überziehen, da sie eine dünnere und gleichmäßigere Schokoladenschicht benötigen, während größere Stücke mehr Schokolade vertragen, um eine vollständige Abdeckung zu gewährleisten.

Die Struktur der Schokoladenoberfläche kann je nach gewünschtem Erscheinungsbild variieren. Für eine unregelmäßige Oberfläche wird die Form des zerkleinerten Laugengebäcks beibehalten, sodass die Unebenheiten der Stücke durch den Schokoladenüberzug sichtbar bleiben. Dies wird durch dünnes Sprühen oder schnelles Tauchen erreicht, wobei die Schokoladenschicht gerade dick genug ist, um die Textur der Stücke zu betonen. Während der Aushärtung wird darauf geachtet, die Stücke nicht unnötig zu bewegen, um die natürliche Struktur der Oberfläche zu bewahren.

Soll die Schokoladenoberfläche hingegen eine regelmäßige und glatte Struktur aufweisen, werden die Stücke vor dem Überziehen in eine definierte Form gebracht oder modelliert. Dies kann durch spezielle Formvorrichtungen oder eine Vorbehandlung erfolgen, bei der die Stücke geglättet werden. Beim Überziehen wird eine ausreichende Menge Schokolade aufgetragen, sodass alle Unebenheiten verdeckt werden. Dies kann durch mehrfache Überzüge oder durch eine besonders dicke Schokoladenschicht in einem einzigen Arbeitsgang erreicht werden. Während des Aushärtens wird die Oberfläche durch leichtes Rotieren oder den Einsatz von Glanzmitteln geglättet, wodurch eine kugelrunde oder andere definierte Form entsteht.

Diese Variationsmöglichkeiten erlauben es, Laugenschokoladegebäck in unterschiedlichen Varianten herzustellen, die gezielt auf verschiedene Marktanforderungen und Konsumentenwünsche abgestimmt werden können. Durch die präzise Steuerung der Prozesse wird eine gleichbleibend hohe Qualität gewährleistet, die sowohl den optischen als auch den geschmacklichen Ansprüchen gerecht wird.

## Patentansprüche

1. Laugenschokoladegebäck, umfassend zerkleinerte und getrocknete Stücke von Laugengebäck, wobei die Stücke mit einer Schokoladenschicht überzogen sind.

2. Laugenschokoladegebäck nach Anspruch 1, wobei das Laugengebäck aus nicht-extrudierter Backware besteht.

3. Laugenschokoladegebäck nach Anspruch 1 oder 2, wobei die Schokoladenschicht die Oberflächen der zerkleinerten und getrockneten Stücke von Laugengebäck jeweils vollständig bedeckt.

4. Laugenschokoladegebäck nach einem der vorhergehenden Ansprüche, wobei die Schokoladenschicht aus Vollmilchschokolade, Zartbitterschokolade, weißer Schokolade oder einer Mischung davon besteht.

5. Laugenschokoladegebäck nach einem der vorhergehenden Ansprüche, wobei der Schokoladenüberzug zusätzlich mit Gewürzen, Nüssen und/oder Fruchtstückchen versehen ist.

6. Laugenschokoladegebäck nach einem der vorhergehenden Ansprüche, wobei die Stücke Größen von 5 bis 30 Millimetern aufweisen.

7. Laugenschokoladegebäck nach einem der vorhergehenden Ansprüche, wobei die Oberfläche der Schokoladenschicht eine unregelmäßige Struktur aufweist, die durch die Form des zerkleinerten Laugengebäcks gegeben ist.

8. Laugenschokoladegebäck nach einem der vorhergehenden Ansprüche, wobei die Oberfläche der Schokoladenschicht eine regelmäßige Struktur aufweist, aufgrund derer die Form des zerkleinerten Laugengebäcks nicht mehr zu erkenne ist.

9. Snackmischung, umfassend Laugenschokoladegebäck nach einem der vorhergehenden Ansprüche kombiniert mit nicht mit Schokolade überzogenen Laugenstücken.

10. Verpackungseinheit, umfassend das Laugenschokoladegebäck nach einem der vorhergehenden Ansprüche, wobei die Stücke nach Größenbereichen gesiebt und in separaten Kammern oder Verpackungen enthalten sind.
